Europäisches Patentamt

European Patent Office

Office européen des brevets

(19)

(11) Publication number: **0 198 274**
**B1**

# EUROPEAN PATENT SPECIFICATION

(12)

(45) Date of publication of the patent specification:
**11.10.89**

(51) Int. Cl.⁴: **B23K 28/00**

(21) Application number: **86103988.1**

(22) Date of filing: **24.03.86**

(54) **Method of cutting sheet material.**

(30) Priority: **01.04.85 ES 541826**

(43) Date of publication of application:
**22.10.86 Bulletin 86/43**

(45) Publication of the grant of the patent:
**11.10.89 Bulletin 89/41**

(84) Designated Contracting States:
**AT BE CH DE FR GB IT LI LU NL SE**

(56) References cited:
**FR-A- 2 378 118**
**GB-A- 1 362 200**
**US-A- 3 764 775**

**TEXTILTECHNIK, vol. 25, no. 5, May 1975,
pages 314-318; R. NESTLER et al.: "
Entwicklungstendenzen in der Bekleidungstechnik. Teil
II: Zuschnittvorbereitung und -durchführung"**

(73) Proprietor: **INVESTRONICA S.A., Tomás Breton, 62,
E-28045 Madrid-7(ES)**

(72) Inventor: **Alcántara Perez, Bernardo, Technology
Department C. Rioja No. 13-4-b, Madrid(ES)**
Inventor: **Diaz-Zorita Gonzalez, Fernando, C. Ramon
Gomez de la Serna, 25, Madrid(ES)**

(74) Representative: **Puschmann, Heinz H. et al, Spott und
Puschmann Patentanwälte Sendlinger-Tor-Platz 11,
D-8000 München 2(DE)**

**EP 0 198 274 B1**

**Description**

## BACKGROUND AND FIELD OF THE INVENTION

The present invention relates to a method and an apparatus for cutting sheet material by NC-controlled cutting machines whereby the sheet material can be available in a wind up form or in a flat plane form.

For cutting sheet material like cloth, paper, cardboard, plastics, plywood, wood, leather, metal foils and the like it is known to use a plasma torch which is effected to move relatively to a support area supporting the material to be cut in each of two directions at right angle to each other and the support area holding the material to be cut stationary having a plurality of elongate elements extending longitudinally from a bacing and arranged such that the supported material is in contact with the support; see GB-A 1 362 200.

According to Textiltechnik, Vol. 25, No. 5, May, 1975, pages 314–318 it is possible, to cut several layers of clothes at once by such a plasma torch cutting machine.

With respect to laser cutter for cutting laminar material like cloth it is known to advance the cloth to be cut for entering the cutting area by means of a conveyor which is advanced in steps, stopping before each cutting operation. Deviations of the actual stopping positions of the conveyor from its nominal stopping positions are compensated for by appropriately modifying the cutting path followed by the laser beam; see US-A 3 764 755.

It is further known to cut sections – like sails – out of a web of material by a water cutter which is effected to move relatively to a support area supporting the material to be cut; see FR-A 2 378 118.

The material to be cut is normally available in the form of a web therefore it must be pulled off and spread out on the cutting table exactly to get precise cuts sections or make out of the web. This is difficult to do automatically insofar as cloth material is deformable and stretchable by tension.

Since normally the minimum length of a marker necessary to cut a complete suit out of a web is about five to seven meters and due to the fact that cutting and removing operations are effected simultaneously the length of the two areas, namely cutting and removing area must be the same. A cutting machine for cutting an entire marker at once would therefore be extremely long.

An additional problem arises due to the fact that the material to be cut has to be hold plane on the cutting table during the cutting operation especially with respect to clothes or fabrics.

## SUMMARY OF THE INVENTION

The method and apparatus for cutting web material described hereinafter comprises a cutting table, a material supply roll, a carriage movable horizontally and transversely with respect to the cutting table and forming the carrier of a cutting tool, the movements of which along pattern specifications being controlled by a computer or data processor in which programmed cutting instructions are stored and using a plasma torch as a cutting tool and a gas permeable cutting support, and using an endless conveyor as cutting table and as feeding means to feed the web or layer to the cutting section and supporting said layer; said conveyor is a special brush with steel filaments of approximately 0,3 mm diameter, 30 mm log with a density of 75 wires/cm², said conveyor being advanced step by step over a distance greater than the greatest movement in the X-direction of the plasma arc cutter to complete a part of a marker, said plasma arc cutter being moved along the determined pattern lines after completion of an advanced step of the conveyor, i.e. when said conveyor is held stationary whereby the spread material is hold firmly against the surface of said conveyor at least at the cutting zone by a vacuum producing installation.

For feeding the material to be cut the web of material is drawn up from a roll and guided over a slacking area and a feeding section of the conveyor belt before reaching the cutting section, each section corresponds to one feed step, said slacking area being sensed by sensing means before reaching the feeding section, whereby the drive means of the feed rollers of the slacking area controlled by the sensing means and the drive means of the endless conveyor belt being controllable independently of each other.

By use of the X-carriage which supports the plasma torch as stepping drive means the conveyor belt and thus the material to be cut is moved stepwise under the control of the data processor or computer.

Subsequently to the cutting section is a ticketing and delivery section over a distance equal to one step of advance feed, the web being held on said conveyor within said section due to gravity only.

## BRIEF DESCRIPTION OF THE DRAWINGS

- Fig. 1 ilustrates a squematic perspective of the machine in which is possible to execute the process.
- Fig. 2 is a squematic of the feeding device.
- Fig. 3 is a plant location of the assembly.
- Fig. 4 is a detail of the exhaust zone.
- Fig. 5 is a squematic view of the clutch to conect the X carriage to the cutting base.
- Fig. 6 is a squematic view of the conveyor cutting base.
- Fig. 7 is a squematic of the brake to be sure that the cutting base not move during cutting time.

2

- Fig. 8 is a perspective of the X-Y assembly.
- Fig. 9 is a perspective in section of the plasma generator head.

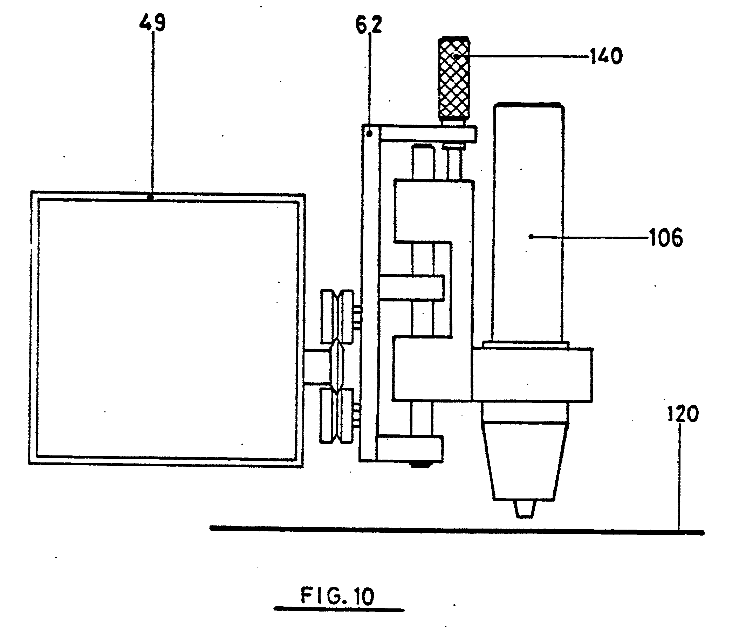

- Fig. 10 illustrates the mamer is which the plasma generator head is mounted on the X-Y assembly.
- Fig. 11 is a plant squematic view of the labelling and removing area.
- Fig. 12 illustrates a tipical pattern cut by means of the system of Fig. 1.
- Fig. 13 is a block diagram of the controller illustrating the conection with their exterior world.
- Fig. 14 is a plant of the cutting area showing the cut and non cut parts.
- Fig. 15 is a block diagram of the X-Y controller.
- Fig. 16 is a block diagram of the microprocessor of the X-Y controller.
- Fig. 17 is a cronogram showing the signal evolution in the sequenzer.

DETAILED DESCRIPTION OF THE INVENTION

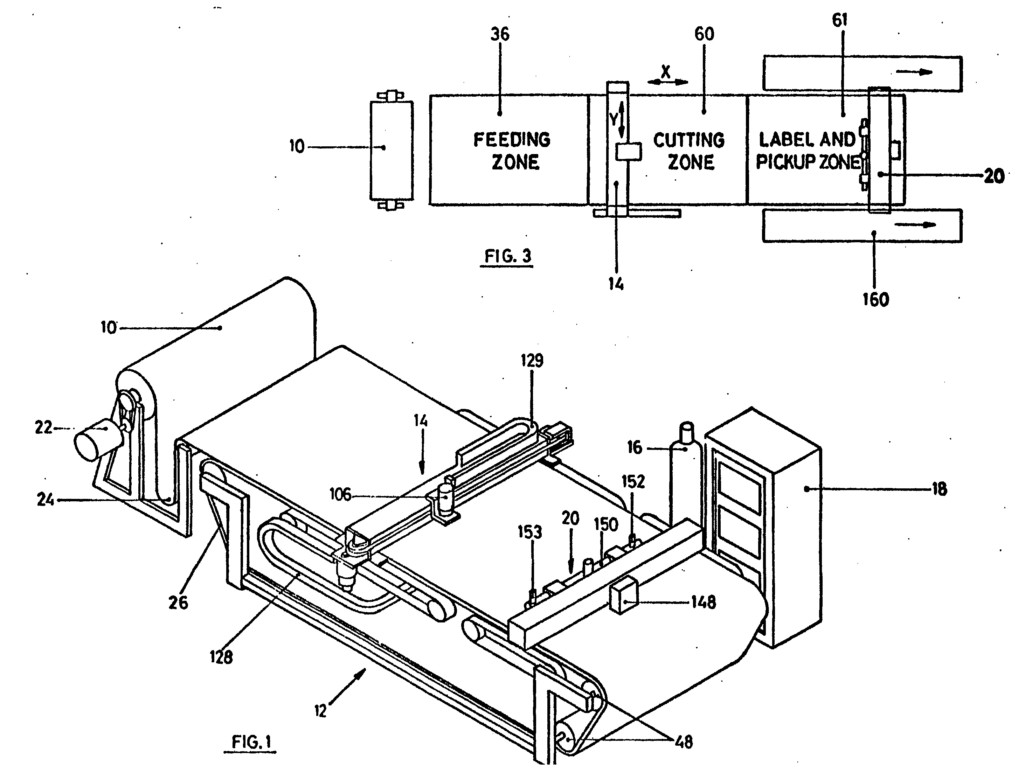

In Fig. 1 we have a general sketch of the machine in which is possible to identify the feeding assembly 10, cutting machine 12 with the X-Y cutter assembly 14, the power supply and controller 18 and the labelling and removing device 20.

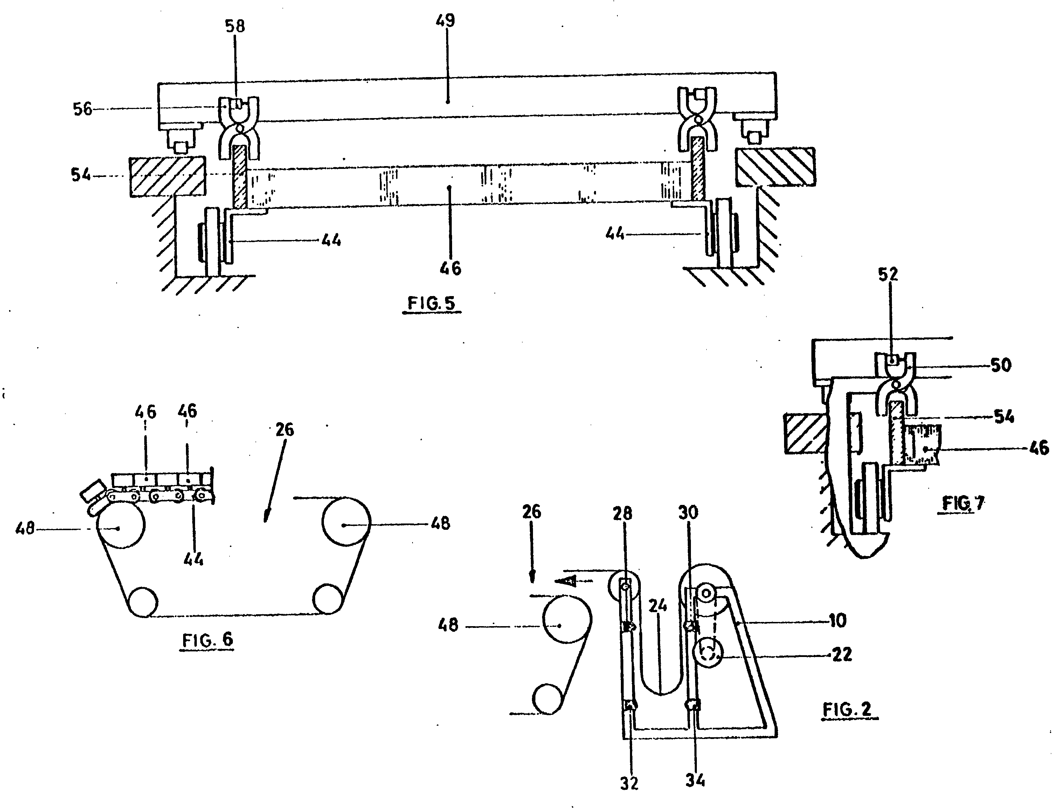

The raw material can be avaible in the roll form or in laminate form, but for the purpose of this description, we suppose it will be in a roll in order to make a reference to the features of the feeding group. One of the main caracteristic of cloth or similar materials is that they are deformable and then if a part is fed over the cutting surface with some residual stretching tension, due to friction between the material and the surface, the former will retain some deformation and if in this situation a part is cut, when it is taken off the cutting surface it will reduce its dimensions and consecuently it will not fit the form you wish. That is why in our enboidment we have the feeding mechanism 10 provided by a motor 22 in order to move the roll of material. Between this and the cutter 12 there is an isolating loop 24 in the way not to have any tension of the cloth during the motion of the conveyor 26, just the weigth of the loop that can be very small. For this purpose, when the conveyor 26 is moving in the indicated direction (Fig. 2), the loop 24 will decrease until the devices 28 and 30, for instance a photocell, will be activated and in turn will activate the motor 22 to make the loop fall until it cover the other pair of sensor 32 and 34, normally uncovered, causing the deactivation of the motor 22.

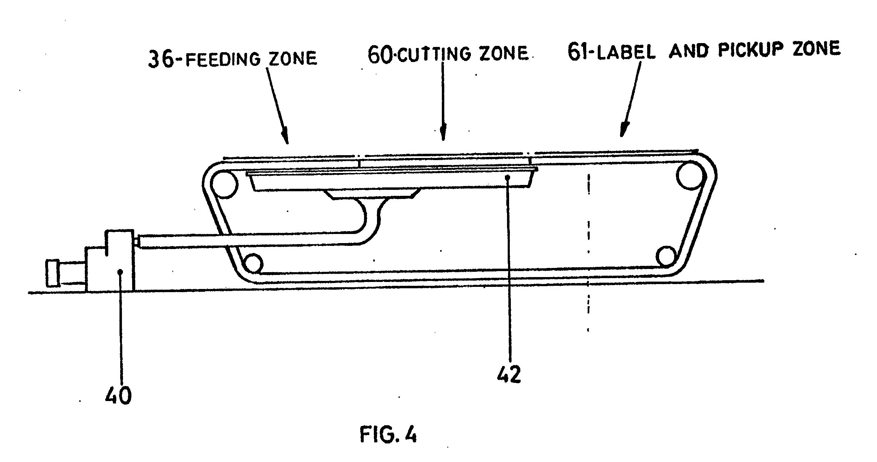

When the machine is at the begining of the operation (during loading), a small quantity of material is led over the loading area 36 (Fig. 3 y 4) and the vacuum generator 40 switched on; in the cage 42 and through the cutting surface of the conveyor 26 made of an air permeable material, is produced a vacuum This gentle vacuum will suffice not to permit any misplacement between conveyor and material and the machine will be loaded by mean of the same movement of the conveyor.

A special brush like 46 surface has proved to be an excelent cutting surface; the filaments are steel of 0.3 mm diameter a approximately 30 mm. long, with a density of 75 wires/cm$^2$ ; this is due to the dispersive effect over the gas made by the top side of a brush with thicker wire, and as a result there is not a clean cut.

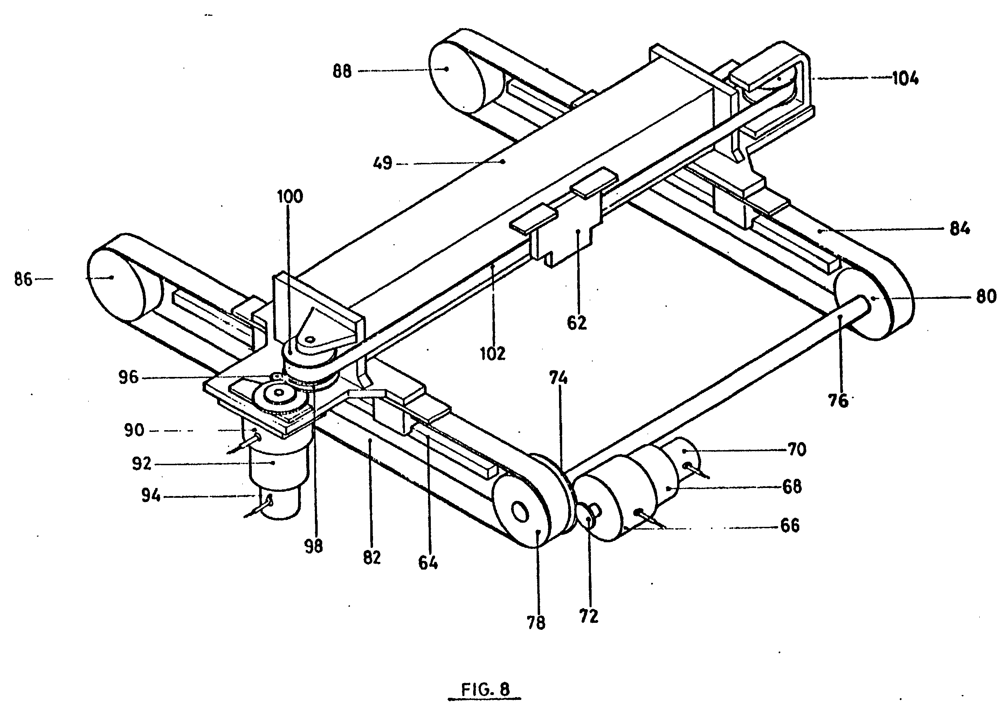

At both sides of the machine, moves the chains 44 (Fig. 5,6); this chains moves around the toothed wheels 48 at both ends of the machine. Each wheel 48 has a corresponding pair on the other side of the table and mounted rigidly with it, but each pair moves free. There is no motor to move the conveyor because this is done by means of the X carriage 49 as will be explained lather; what is necesary is some kind of brake 50 to be sure there is no motion of the conveyor during cutting operation, but permitting free motion when the conveyor is engaged to the X carriage. For this purpose, the brake 50 (Fig. 7) has some actuator 52 in the manner that, during cutting, the brake 50 brakes the conveyor 26 on the part 54; the same part is used to engage the conveyor to the X carriage 49; the brake 50 is suported by the fixed structure of the machine.

A similar part 56 to the brake 50 is mounted on the X carriage 49 (Fig. 5). When is necesary to move the conveyor, in order to put new material into the cutting area, the actuator 52 release the brake 50 fixed to the X carriage so when this moves, the conveyor moves exactly the same amount and, as will be seen, the controller will be able to correct exactly this amount in the coordinates sent to the position servos of X an Y carriages.

Over the cutting area 60, is moved the X-Y assembly 14. As indicated in more detail in Fig. 8, the X-Y assembly is composed of the X carriage 49 and Y carriage 62; the X carriage 49 is placed perpendicularly to the slides 64 and then the Y carriage path is perpendicular to the X carriage path. Both axis have the same principle so we describe just the X axis. The X motor 66 is placed in one end of the cutting area and is a group of motor 66, tachometer 68 and position transducer 70 is the actuator of a position servo loop. The motor moves by means of a reduction gear 72-74 the shaft 76 which cross the cutting table; at both end of the shaft are the toothed pulleys 78, 80 around wich are the belts 82, 84 in tension by means of the pulleys 86, 88. The carriage 49 is moved by the belts 82, 84 to which it is bolted. Mounted on the X carriage 49 are the Y motor 90, tachometer 92, position transducer 94, gear 96, 98, drive pulley 100, belt 102 and tension pulley 104 to move the Y carriage 62. The signal to comand the X and Y loop comes from the controller 18, as will be explained later.

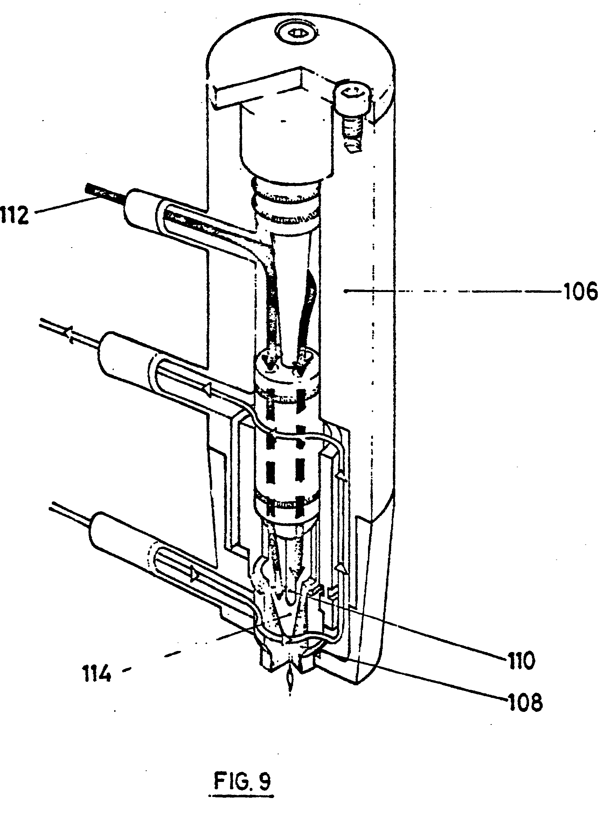

As a cutting tool, a plasma jet is used. In Fig. 9 is possible to see, as ilustration purposes, a section of the plasma generation head 106. In the area between anode 108 and catode 110 an electric discharge is produced which heats the argon and/or nitrogen gas introduced into the head, through the inlet 112. The discharge chamber is cooled by circulating water 114. The result is a supersonic jet about 2 Mach and temperature in the range 10000-20000 °C, jet diameter is about 0.7 mm and 5-10 mm long. The power in the jet is up to 3 Kw. There is no fire risk as the jet is created from inert gas.

This tool, contrary to other already used devices like lasers, allows an extremely easy management of the cutting beam, since this is formed directly in the cutting head 106, by mean of pressurized inert gas conducted with simple hose running in the guide 128 and 129, and brought at plasma state by mean of an electric arc generated in the head itself.

The plasma jet generator is a known invention and the essence of this invention is its application on the described X-Y n/c machine for the cutting of sheet material up to a thickness of 15 mm.

The plasma jet beam can be interrupted in response to control panel 18 signals, in order not to cut when the motion of the head 106 is in a segment that must not be cut. Another advantage of this application is that, contrary to lasers, there are no invisible radiations dangerous for the machine operators. Also within 10 mm from the head nozzle the plasma is completely dissipated, minimizing any possible risk of burning.

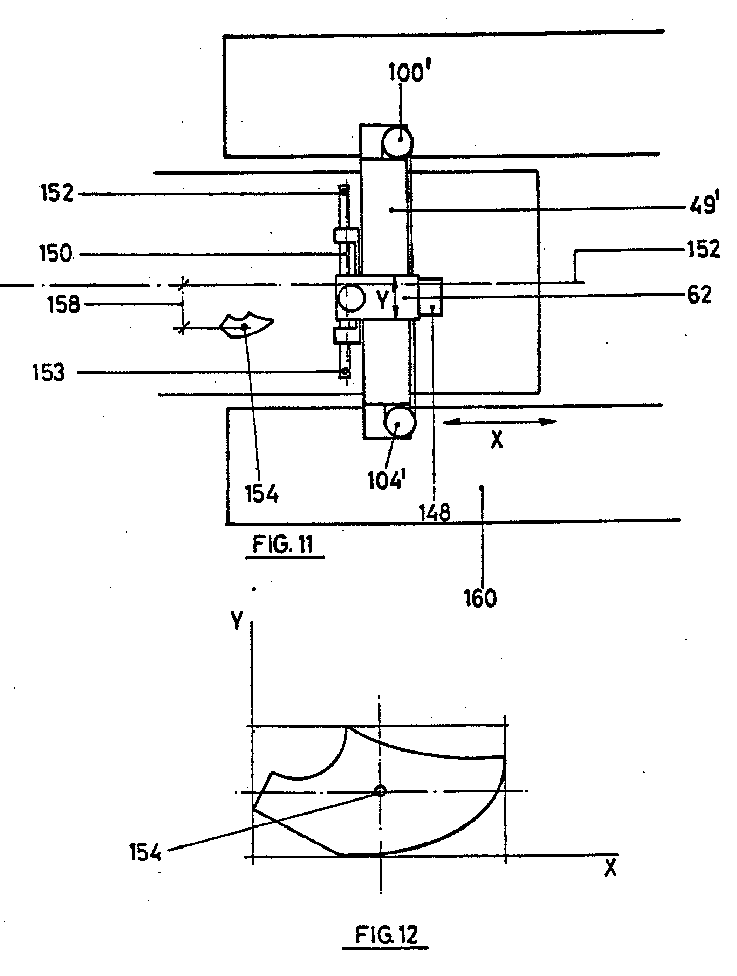

The labelling and removing device 20 is an assembly similar to the X-Y assembly 14 outlined before but in place of the plasma jet head 106, on the Y carriage 62 is mounted a labelling head 148 and a holding bar 150. As can be seen in the Fig. 11, over the Y carriage and in one side of the X carriage 49 is the labelling assembly 148; it is a standard label dispenser like the supermarket ones, to put a label over each cut part; to the other side of the X carriage is the holding bar 150. Mainly it is a toothed bar, sliding on bearings in a direction paralell to the Y axis and with a sucker 152 and 153 on each of its end; the length of the bar must be almost the same of the transverse of the cutting area, and the suckers have a small motion perpendicular to the cutting surface, for instance by means of a small pneumatic cylinder; the bar motion is controlled by another motor, like the X or Y mover.

The way that this removing device works is as follows. First of all, the controller knows all the cut part coordinates and it can calculate the rectangle that enclose the part, and then the midpoint defined as in Fig. 12; normally this point will be into the part. If not, the problem is a little bit more difficult but possible to solve, and we are not specially interested on it. Then we will imagine the cutting area divided into two sections by an imaginary line 152 paralell to the X axis; if the midpoint 154 of the part to be taken out is for instance in the lower section of the removing area, then the bar 150 put the sucker 152 in the nearest position to the Y carriage 62, then the X-Y carriage move to put the sucker 152 just over the midpoint 154, the sucker is lowered by the cylinder (not shown) and once the part is taken, then de Y carriage 62 moves to the lower side of the table (lower side in Fig. 11) and once it reaches the limit, then the bar 152 moves to leave the part over the stock area 160; this stock area is preferably a conveyor, then it is moving in the sense shown in Fig. 3.

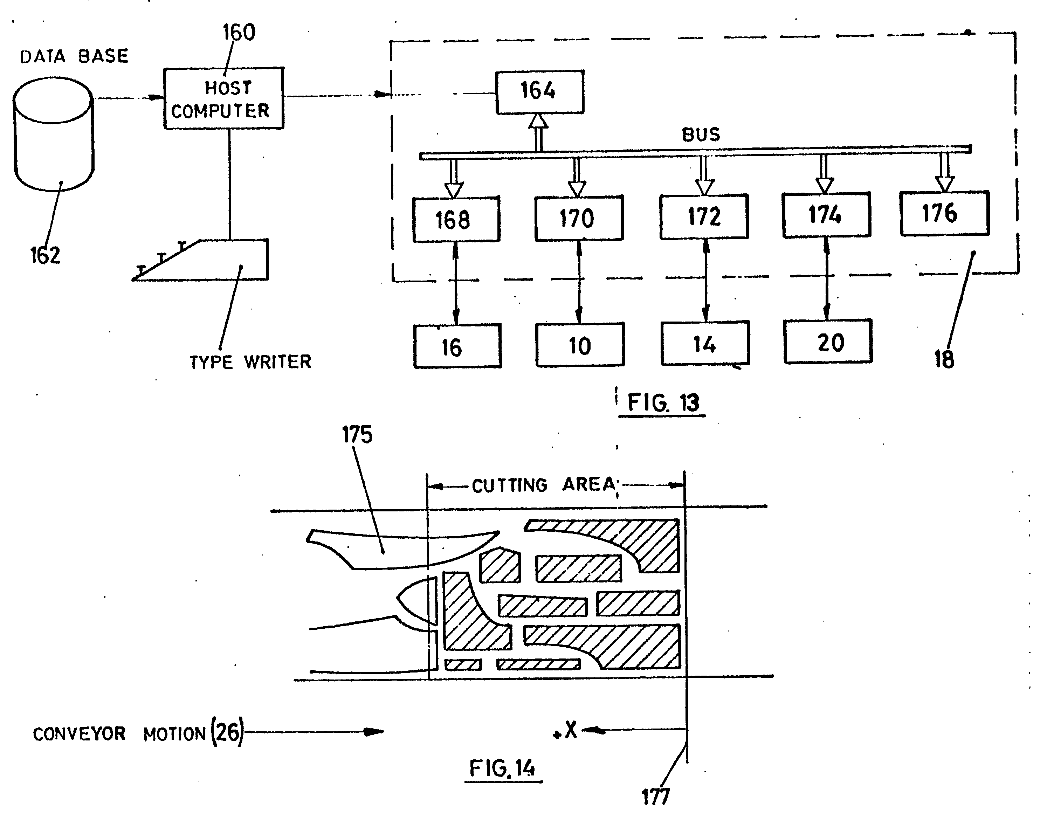

Finally, the machine controller 18, has a structure like the one shown in Fig. 13. Normally a host computer 160 receives data from a data base 162 and send them to the machine controller 18. Into the controller, the main CPU 164, receives data from the computer 160 then it manages the microprocessor of each part of the machine. This parts are the plasma jet control 168, the feeding assembly control 170, the cutting assembly control 172, the labelling and removing device control 174 and the control panel 176.

During working cycle, mainly the cutter assembly 14 with the plasma jet 16 works in paralell with the feeding device 10 and the printing and removing device 20, then information for this independent areas are sent from the main CPU 164 to each controller; when it is necesary to move the conveyor, the main CPU 164 wait for the last device to complete its task and then send the order to move the conveyor; this is made by the cutting controller 172 first engaging the brake 56, then desengaging the brake 50, then moving the X carriage 49 the distance ordered by the main CPU 164 (just until the next part with smaller X coordinate not cut reaches the frontier of the cutting area, see Fig. 14). Note that this motion in the X-direction, must be subtracted from all the X coordinates sent from the host computer 160 to the controller 18, and this is very easely done by the main CPU 164 wich, knows all the data.

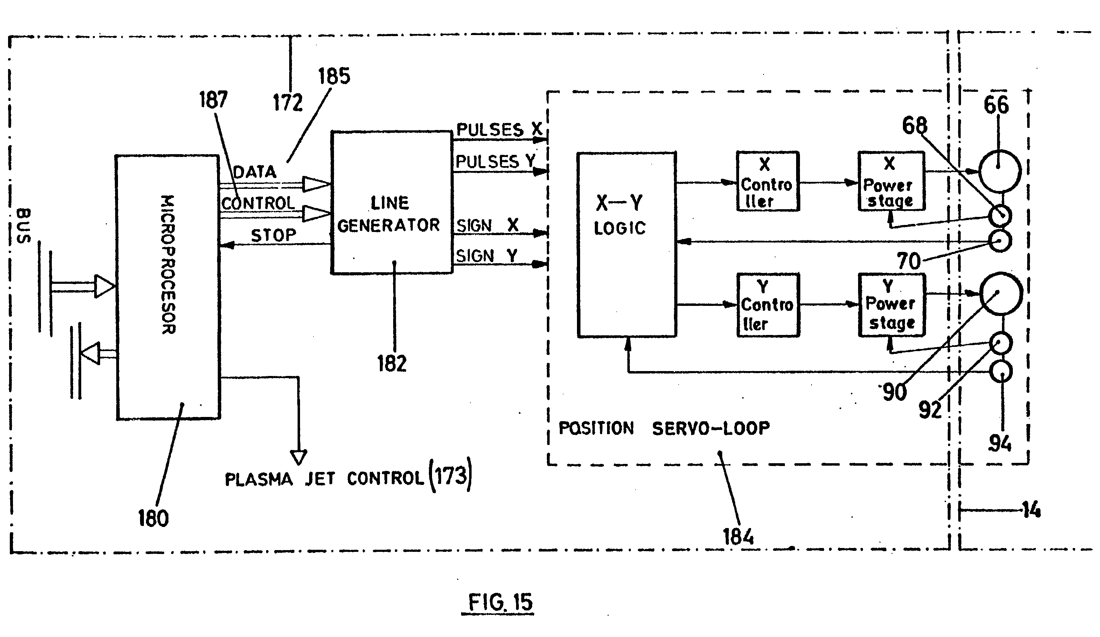

As can be seen in Fig. 15, the cutting assy control 172 is composed of a microprocesor 180, the line generator 182 and the position servo-loop 184. In automatic mode the microprocesor 180, receives data froom the CPU 164, decode and load them into the line generator registers in order to generate the line. When this is done, it send a signal 173 to turn the plasma jet on and tell the line generator that pulses must be sent to the servocontroller 184.

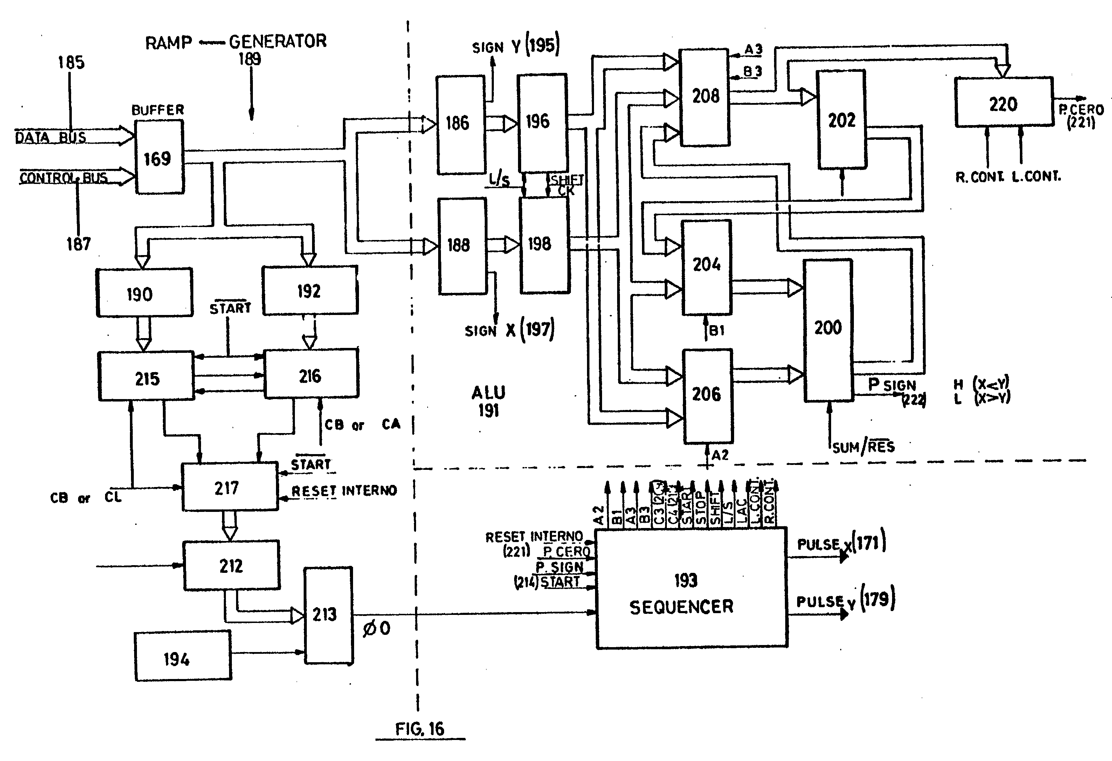

The line generator (Fig. 16) has 4, 16 bits registers; the 186 and 188 registers are to store the number of pulses which are necesary move in the X and Y directions, the 190 register is to store the number of pulses which are necessary to move during acceleration and the 192 register is to store the number of pulses which are necesary to move at constant speed. With this data, the line generator is able to send to the servo-controller 184 the exact number of pulses for each axe X and Y (signals 171 and 179), with its sign (signals 185 and 187) and just in time; if for instance the line has a slope of 30° , in other words $X = 2 * Y$, the line generator send one pulse to the Y axis each two pulses sent to the X axis.

The information mentioned before, reaches the buffer 169 of the line generator 182 throught the 8 bits DATA BUS 185 all register' s load control is done by the CONTROL BUS 187. The motion' s direction of the motors (195 SIGN Y, 197 SIGN X) is represented by the most significative bit of the 186 and 188 registers.

In more detail, the line generator 182 has the following blocks (Fig. 16): the acceleration ramp generator 189, the ALU 191 and the sequencer 193. The ramp generator 189 varies the frecuency of the clock signal 194 that control the sequencer 193. With this frecuency variations is possible to change the time betwen pulses in order to accelerate or decelerate. The ALU 191 makes all the necesary arithmetic operations to generate the lines and the sequencer 193 generate signal, to control the ALU and ramp generator cards and send the X and Y pulses.

In order to explain the sequencer 193, it is first of all neccesary to define the signals reaching and leaving it.

- C1, C2, C3, C4; are the four cycles of the sequencer 193.
- 01, 02, 03, 04; are the four phases each cycle is divided.
- L/S: is the signal indicating to the X,Y shift registers 196, 198 if they must load or shift.
- Shift CK: clock signal for the shift registers, 196, 198.
- LAC: Pulse to load the accumulator, 202.
- LCONT: Pulse to load the ALU counter 220.
- RCONT: Pulse to decrement by one the ALU counter 220.
- Lbc: Pulse to load the state bistable of the sequencer 193; this bistable indicates if the sequencer 193 must stop or not.
- Lbs: Pulse to load the state bistable of the sequencer 193; this bistable indicates if the prior subtraction result is positive or negative.
- Lbd: Pulse to load the state bistable of the sequencer 193; this bistable indicates which is the dominant axis.
B1: signal to control the multiplexer 204
A2: signal to control the multiplexer 206
A3 y B3: signal to control the multiplexer 208
SUM/RES: signal to control the ALU 200 to indicate if an addition or subtraction is going to be done.
STOP: signal to tell to the microprocessor 180 that one line is finished.
START: signal generated by the microprocessor 180 indicating to the line generator 182 that a straight line shall start. Such line data are stored into the LATCH registers 186, 188.
PCERO: signal generated by the ALU 191 when the counter 220 reaches the zero value.
PSIGNO: signal generated by the ALU 200 indicating the result of the arithmetic operation just finished.
PX: Pulse to the X axis.
PY: Pulse to the Y axis.

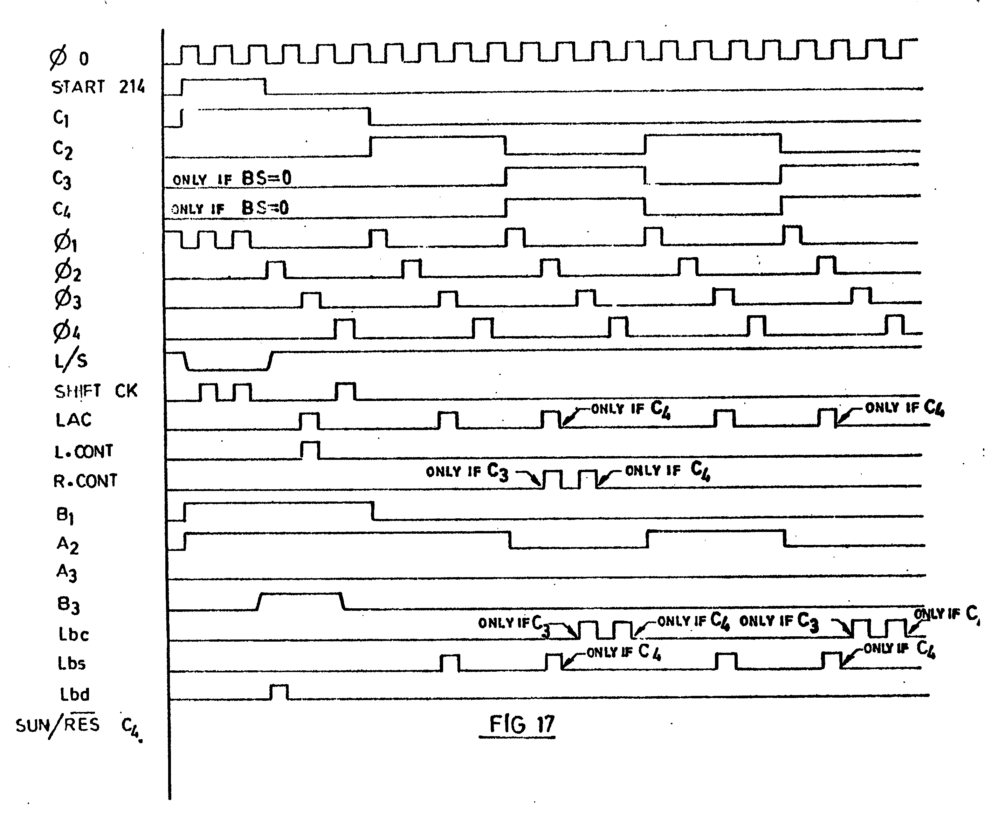

Fig. 17 shows a sequencer cronogram for the case in which the state bistable of the dominant axe (BD) has a 0.

The sequencer 193 has 4 cicles (C1-C4) and each cycle is divided in 4 fases (01-04). The START signal given by the microprocessor 180, start up the line generation process. Firs of all, the cicle C1 is performed, and the necessary signals to activate the following operations are given:

a) The X, Y shift registers 196, 198, are loaded during 01, L/S is in low level and the shift Ck is activated.

b) In order to know what is the dominant axe, the information of the two shift registers 196,198 are subtracted; to do this, the signal B1 must be at high level, A2 at high level and SUM/RES at low level. During 03, the state bistable of the dominant axe B.D. is loaded activating Lbd with the sign of the subtraction result, indicating in this way what is the dominant axe.

c) A3 y B3 take the adequate value to activate the multiplexer 208 in the way to permit the accumulator 202 and counter 220 being loaded with the dominant axe value.

d) During 03, LAC and LCON are activated.

e) The increments of X and Y are multiplied by 2, shifting during 04 the values stored into the shift registers 196, 198. To do this, the signal L/S must be at high level and during 04, shift CK is activated.

After C1, C2 is started and this cycle is repeated as many times as pulses are necessary to be done by the dominant axe. During this cycle, the following operations are done:

a) - The subtraction between the value of the accumulator 202 and twice the number of pulses the slave axe must move; this value is stored in one of the two shift registers 196, 198.

- The signal B1 goes to low level and A2 at the level indicated by the bistable B.D. During 03 Lbs and LAC are activated in order to load both the accumulator 202 and the state bistable B.S.

If BS = 0 the next cycle is C3, while the following operations are done:

a) A pulse to the dominant axis is sent.
b) The value of the counter 220 is decreased by one during 02
c) The state bistable B.C. is loaded with the value of the counter 220.

If BS =1 the next cycle is C4; this cycle is similar to C3 but in this case a pulse is sent to each axis.

If, after a cycle C3 or C4 is completed, BC indicates that the counter 220 has not reached the zero value, then the process is repeated starting from the C2 cycle. In case counter has reached zero value, the sequencer 193 is stopped and the STOP signal is generated.

The logic equations governing this signal are:

Shift CK = 01.C1 + 04.C1

Lac = 02.C4 + 03.C2 + 03.C1

Lcon = 03.C1

rcont = 02.C3 + 03.C4

Lbc = 03.C3 + 04.C4

Lbs = 02.C4 + 03.C2

Lbd = 02.C1

B1 = C1

A2 = C1 + C2.$\overline{BD}$ + C4.BD

A3 = $\underline{BD}$.C1

B3 = BD.C1

SUM/RES = C4

Basically, the ALU 191 is a 16 bits ALU 200 with accumulator 202 and X,Y shift registers 196, 198. The multiplexer 204 and 206 enable the ALU 200 to choose the operands, and the multiplexer 208 permits to load the accumulator with the information of any one of the shift register 196 and 198 or the ALU 200 output. As we told before, the LATCH X and Y registers 186 and 188 are to interface with the microproceser 180; with this two registers, is pcssible for the microprocessor and line generator to work in an asincronous way.

The ALU 191, has got a counter 220 which, is in charge of counting the number of pulses given to the dominant axe. We understand for dominant axe of one given segment $\Delta$ S whose components along the axis are $\Delta$ X, $\Delta$ Y, the one with longer length, and for slave axe, the smaller one.

When the counter has reached the total number of pulses in the dominant axe, it send a signal to the sequencer 193 throught the line 221; this is the way for the sequencer to know that the segment has ben completed.

The line generator, executes the following algorithm

---

Counter (220) = no. pulses dominant axe

Acumulator (202) = no. pulses dominant axe

WHILE counter 220 > 0 DO

BEGIN (1) Acumulator (202) = Acumulator (202)–(2 * no. pulses slave axe)

IF acumulator (202) > 0  THEN

    (2) Pulse dominant axe

    Counter (220) = Counter (220)-1

    ELSE

    (3) Pulse dominant axe

    Pulse slave axe

    Counter (220) = Counter (220)-1

    Acum (202) = Acum (202) + (2 * no. pulses dominant axe)

END

---

The ALU 200, tell to the sequencer 193 the sign of the arithmetic operation made in (1) throught the line 222; in this way the sequencer gives a pulse only in the dominant axe (2) or in both axes (3).

Now ramp generator 189 is explained. Each four cicles of the clock 194, the sequencer 193 send a signal $P_X$ or/and $P_Y$. That is why changing the clock frecuency, is possible to change time between pulses and in turn, is possible to accelerate and decelerate. The ramp generator 189 is in charge of changing this frecuency; it is basically a N divider 213, where N is a digit put on its input; this digit can be dinamically changed, changing the address that is in the EPROM 212. This EPROM has stored in consecutive positions the desired acceleration ramp. It works as it follows. When the signal START 214 is done, the accelerating counter 215 and the constant speed counter 216 are loaded with the adecuate values; this values are at the output of the 190 and 192 registers. If the accelerating counter 215 is not equal to zero, the constant speed counter 216 is in the inhibit state, and the direction counter 217 is in the UP mode; each time a signal 209 or 210 reaches to the A.C. 215, it is decremented and the direction counter 217 increment, changing the EPROM out put. When the A.C 215 reaches the zero value, it permits the constant speed counter 216 to be decreased, changing its output and the direction counter to the inhibit state. Now, is the constant speed counter 216 that decrease on state each signal 209 or 210 arrives it and the direction counter is maintained unchanged; in this state neither the output of the divider 213 nor the frecuency of the X, Y pulses change; in this state, the speed of the X, Y motors are constant. When the constant speed counter reaches the zero value, it is inhibited and make the direction counter 217 go to the down state; now each signal 209 or 210 decrease the value of the direction counter 217 until it reaches the zero value that finish the cicle.

## Claims

1. A process for cutting sections (175) out of a web of material (120) using a cutting table (60), a material supply roll, a carriage (14) movable horizontally and transversely with respect to the cutting table and forming the carrier of a cutting tool, the movements of which along pattern specifications being controlled by a data processor (18) in which programmed cutting instructions are stored and using a plasma arc cutter (106) as cutting tool and a gas permeable cutting support, characterized by the application of an endless conveyor (26) as cutting table and as feeding means to feed the web or layer to the cutting section and supporting said layer; said conveyor comprises special brush with steel filaments of approximately 0,3 mm diameter, 30 mm long with a density of 75 wires/cm², said conveyor (26) being advanced step by step over a distance (+X) greater than the greatest movement in the X-direction of the plasma arc cutter to complete a part section of a whole marker, said plasma arc cutter being moved along the determined pattern lines after completion of an advance step of the conveyor, and holding said conveyor stationary and using a vacuum producing installation for holding the spread material firmly against the surface of said conveyor at least at the cutting zone.

2. A process according to claim 1, wherein the web (120) of material to be cut is drawn up from a roll (10) and guided over a slacking area (24) and a feeding section (369) of the conveyor belt before reaching the cutting section (60), each section corresponds to one feed step, said slacking area being sensed by sensing means before reaching the feeding section (36), whereby the drive means (22) of the feed rolls controlled by the sensing means (28, 30, 32, 34) of the slacking area and the drive means (48) of the endless conveyor belt being controllable independently of each other.

3. A process according to claims 1 and 2, wherein said web of material (120) subsequent to the cutting action is fed to a ticketing and delivery section (61) over a distance equal to one step of advance feed, said web (120) being held on said conveyor belt (26) within said delivery section (61) due to gravity only.

4. A process according to claims 1 to 3, wherein ticketing and delivery tools (20) are associated to said ticketing and delivery section (61), said tools (20) being controlled and moved horizontally and transversely by using marker data of the plasma arc cutter within the data processor so as to be moved to or near the centre point (154) of the cutted part.

5. An apparatus for cutting material according to the process defined in claims 1 to 4 including a cutting table (60), a material supply roll, and a carriage (14) movable horizontally and transversely with respect to the cutting table and forming the carrier of a plasma arc cutter (16) as cutting tool (106), the movements of which along pattern specifications being controlled by a data processor (18) in which programmed cutting instructions are stored, characterized in that the cutting table is provided with a vacuum producing installation (40, 42) for holding the spread material (20) firmly against the cutting table, the cutting table being designed as an endless gas permeable conveyor belt (26), travelling stepwise at least across a feed and cutting section (36, 60) over a distance (+X) greater than the maximum displacement of the plasma arc cutter (106) in the X-direction to complete a part of the marker, a drive means for pulling the material from the supply roll into the slacking area including a motor (22) controlled by sensing means (28, 30, 32, 34) adapted to sense the greatest and smallest length of an open loop portion (24) of the material and a D.C. motor for the endless conveyor (26) controlled by control signals from the data processor (18).

6.- An apparatus of claim 5, wherein the feed and cutting section (36,60) is followed by a ticketing and delivery section (61) dimensioned in longitudinal direction to be equal to one feed step of the conveyor belt (26), said conveyor belt extending across said delivery section, said delivery section being associated with a horizontally and transversely movable carriage (20) supporting the ticketing and lifting tools (148, 152, 153), the movements of said carriage being controlled by the data processor (18).

7.- An apparatus of claims 5 and 6, wherein the stepping drive means for the conveyor belt (26) are composed of the drive motor (66) for moving the carriage (14) which supports the plasma arc cutter in the X-direction, said carriage being adapted to be temporarely coupled to the endless conveyor belt (26) by means of data processor (18) controlled clutch means (56).

8.- An apparatus of claims 5 to 7, wherein the vacuum producing installation (40) includes a sucking chamber (42) extending below the upper surface of said endless conveyor belt (26) only across the feeding and cutting section (36,60).

9.- An apparatus of claims 5 to 8, wherein the carriage (14) serving as a support for the plasma arc cutter (16) is provided with controllable friction clutch means (56) on both ends, said clutch means being operatively associated to arresting means (54) provided on both sides of the endless conveyor belt.

10.- An apparatus of claims 5 to 9, wherein said carriage (14) supporting said plasma arc cutter (106) travels in guide rails (64) extending parallel of the endless conveyor belt (26) and is in driving engagement with endless tooth belts (84), which in turn are driven in synchronism by a D.C. motor (66) connected to the control loop for displacement in X- direction.

11.- An apparatus of claims 5 to 10, wherein said plasma arc cutter (106) is releasably coupled to the endless tooth belt (102) by means of a clamping device (62), said tooth belt being supported on a carrier (49) adapted to be moved transversely of the conveyor belt, said tooth belt being driven by a D.C motor (90) which is connected to the control loop for the transverse movement in Y-direction.

12.- An apparatus of claims 5 to 11, wherin said marking tool is a ticketing tool (148), that the lifting means are formed by suction nozzles (152, 153) which are arranged on a transversely (Y-direction) movable tooth bar (150) substantially equal in length to the width of the endless conveyor belt (26), said ticketing tool and said suction nozzles being arranged on both ends of the horizontally and transversely (X-/Y-direction) movable carriage (20), said tooth bar (150) which carries said suction nozzles (152,153) being supported to be movable perpendicularly to the plane of the conveyor belt (26).

13.- An apparatus for cutting parts from a web or lay of material using a cutting table provided with a vacuum producing installation for clamping the spread material firmly against the cutting table and a carriage movable horizontally and transversely of the cutting table and forming a cutting tool carrier, the movements of which along pattern specifications being controlled by a data processor in which programmed cutting instructions are stored, as defined in claims 5 to 12, wherein the controller (18) is linked to a computer station (160), which receives its inputs from a data base (162) and a manual data input; in side of the controller, a CPU (164) is connected via a data bus with control units (168, 170, 172, 174, 176), in which there are incorporated the circuits for controlling the functions of the plasma arc cutter (16), the feed machanism (10), the cutting carriage (14) and the ticketing and removing assemblies (20).

14.- An apparatus of claim 13, wherein the control unit (172) includes a microprocessor (180) associated to a cutting line generator (182) and positioning control loops (184).

15.- An apparatus of claim 14, wherein the cutting line generator (182) includes a ramp generator (189) for producing position reference signals and arithmetic logic unit (ALU 191) to do the necesary arithmetic operation; the control signals for the previons blocks and the control signal (Px, Py) for activating the D.C motors of the carriages (14,20) are the output of a sequencer (193).

16.- An apparatus according to claim 15 wherein the sequencer (193) is a four cycles (C1-C4) bistable circuit, each cycle is divided into four phases (01-04).

## Revendications

1. Procédé de découpage de pièces (175) à partir d'une nappe de matériau (120) en utilisant une table de découpage (60), une bobine d'alimentation en matériau, un chariot (14) mobile horizontalement et transversalement par rapport à la table de découpage et constituant un support d'un outil de découpage, les mouvements de cet outil, le long d'un tracé prédéterminé, étant commandés par un processeur de données (18) dans lequel des instructions de découpage programmées sont stockées, et en utilisant un outil de coupe à arc de plasma (106) en tant qu'outil de coupe et un support de découpage perméable au gaz, caractérisé par l'application d'un transporteur sans fin (26) en tant que table de découpage et moyen d'alimentation pour alimenter la nappe ou couche vers la zone découpage et pour supporter la nappe, ce transporteur comprenant une brosse spéciale avec des filaments en acier ayant un diamètre d'environ 0,3 mm, une longueur d'environ 30 mm et une densité de 75 filaments/cm², ce transporteur (26) étant avancé d'une manière intermittente sur une distance (+X) supérieure au plus grand mouvement, dans la direction X, de l'outil de coupe à arc de plasma, nécessaire pour achever le découpage d'une pièce d'un marqueur total, cet outil de coupe à arc de plasma étant déplacé le long des lignes du tracé déterminé après l'achèvement d'un pas d'avancement du transporteur, et en ce qu'on maintien le transporteur fixe et on utilise un générateur de vide pour maintenir le matériau étalé fermement appliqué contre la surface du transporteur, au moins à l'endroit de la zone de découpage.

2. Procédé suivant la revendication 1 caractérisé en ce que la nappe (120) de matériau devant être découpée est dévidée à partir d'une bobine (10) et elle est guidée a travers une zone de formation de boucle (24) et une zone d'alimentation (36) de la courroie du transporteur avant d'atteindre la zone de découpage (60), chacune de ces zones correspondant à un pas d'avancement, la zone de formation d'une boucle étant contrôlée par des moyens de détection avant que la zone d'alimentation (36) ne soit atteinte, les moyens d'entraînement (22) des rouleaux d'alimentation, qui sont commandés par les moyens de détection (28, 30, 32, 34) de la zone de formation de la boucle et les moyens d'entraînement (48) de la courroie du transporteur sans fin étant commandés indépendamment les uns des autres.

3. Procédé suivant l'une quelconque des revendications 1 ou 2 caractérisé en ce que la nappe de matériau (120) est amenée, après l'opération de découpage, à une zone d'étiquetage et d'évacuation (61), en étant déplacée sur une distance égale à un pas du mouvement d'avancement, la nappe (120) étant maintenue, uniquement sous l'effet de la gravité, sur la courroie du transporteur (26), dans la zone d'évacuation (61).

4. Procédé suivant l'une quelconque des revendications 1 à 3 caractérisé en ce que des organes d'étiquetage et d'évacuation (20) sont associés à la zone d'étiquetage et d'évacuation (61), ces organes (20) étant commandés et déplacés horizontalement et transversalement en utilisant les données de marqueur de l'outil de coupe à arc de plasma dans le processeur des données, de manière à être déplacés vers le milieu (154), ou un point proche de celui-ci, de la pièce découpée.

5. Appareil pour découper un matériau suivant le procédé défini dans les revendications 1 à 4 comportant une table de découpage (60), une bobine d'alimentation du matériau et un chariot (14) mobile horizontalement et transversalement par rapport à la table de découpage et constituant le support d'une tête de coupe à arc de plasma (16) en tant qu'outil de coupe (106), les mouvements de cet outil de coupe le long d'un tracé prédéterminé étant commandés par un processeur de données (18) dans lequel des instructions de découpage programmées sont stockées, caractérisé en ce que la table de découpage est pourvue d'une générateur de vide (40, 42) pour maintenir le matériau étalé (20) fermement appliqué contre la table de découpage, cette table de découpage étant conçue sous la forme d'une courroie de transporteur sands fin (26) perméable au gaz, se déplaçant par intermittence au moins en travers d'une zone d'alimentation et d'une zone de découpage (36, 60) sur une distance (+X) supérieure au déplacement maximal de l'outil de coupe à arc de plasma (106) dans la direction X qui est nécessaire pour achever le découpage d'une pièce du marqueur, un dispositif d'entraînement pour tirer le matériau à partir de la bobine d'alimentation dans la zone de formation de la boucle, ce dispositif comportant un moteur (22) commandé par des moyens de détection (28, 30, 32, 34) adaptés de manière à détecter la longueur la plus grande et la longueur la plus petite d'une portion (24), formant une boucle ouverte, du matériau, et un moteur à courant continu pour entraîner le transporteur sans fin (26), ce moteur étant commandé par des signaux de commande provenant du processeur de données (18).

6. Appareil suivant la revendication 5 caractérisé en ce que la zone d'alimentation et de découpage (36, 60) est suivie d'une zone d'étiquetage et d'évacuation (61) qui est dimensionnée, dans la direction longitudinale, de manière à être égale à un pas d'avancement de la courroie de transporteur (26), cette courroie de transporteur s'étendant en travers de la zone d'évacuation, cette zone d'évacuation étant associée à un chariot (20) mobile horizontalement et transversalement, ce chariot supportant des organes d'étiquetage et d'élévation (148, 152, 153) et les mouvements de ce chariot étant commandés par le processeur de données (18).

7. Appareil suivant l'une quelconque des revendications 5 et 6 caractérisé en ce que le dispositif d'entraînement par intermittence de la courroie de transporteur (26) est constitué du moteur d'entraînement (66) pour déplacer, dans la direction X, le chariot (14) supportant l'outil de coupe à arc de plasma, ce chariot étant adapté de manière à être accouplé temporairement à la courroie du transporteur sans fin (26) par l'intermédiaire d'un embrayage (56) commandé par le processeur de données (18).

8. Appareil suivant l'une quelconque des revendications 5 à 7 caractérisé en ce que le générateur de vide (40) comporte une chambre d'aspiration (42) s'étendant sous la surface supérieure de la bande de transporteur sans fin (26), uniquement le long des zones d'alimentation et de découpage (36, 60).

9. Appareil suivant l'une quelconque des revendications 5 à 8 caractérisé en ce que le chariot (14) servant de support pour l'outil de coupe à arc de plasma (16) est prévu avec un embrayage à friction commandable (56) à ses deux extrémités, ces embrayages étant associés opérationellement avec des moyens d'arrêt (54) prévus des deux côtés de la bande de transporteur sans fin.

10. Appareil suivant l'une quelconque des revendications 5 à 9 caractérisé en ce que le chariot (14) supportant l'outil de coupe à arc de plasma (106) se déplace dans des rails de guidage (64) s'étendant parallèlement à la bande de transporteur sans fin (26) et il est accouplé avec des courroies crantées sans fin (84) qui sont à leur tour entraînées en synchronisme par un moteur à courant continu (66) relié à la boucle de commande pour le déplacement dans la direction X.

11. Appareil suivant l'une quelconque des revendications 5 à 10 caractérisé en ce que l'outil de coupe à arc de plasma (106) est accouplé d'une manière amovible à une courroie dentée sans fin (102), au moyen d'un dispositif de fixation (62), cette courroie dentée étant montée sur un support (49) et adaptée de manière à être déplacée transversalement par rapport à la courroie du transporteur, cette courroie dentée étant entraînée par un moteur à courant continu (90) qui est relié à la boucle de commande pour le mouvement transversal dans la direction Y.

12. Appareil suivant l'une quelconque des revendications 5 à 11 caractérisé en ce que l'organe de marquage est un dispositif d'étiquetage (148), les moyens d'élévation sont formés par des ventouses (152, 153) qui sont prévues sur une barre dentée (150) mobile transversalement (dans la direction Y), ayant une longueur sensiblement égale à la largeur de la courroie de transporteur sans fin (26), le dispositif d'étiquetage et les ventouses étant disposé au deux extrémités du chariot (20), mobile horizontalement et transversalement (dans les directions X/Y), cette barre dentée (150) qui porte les ventouses (152, 153), étant supportée de manière à pouvoir être déplacée perpendiculairement au plan de la courroie de transporteur (26).

13. Appareil de découpage de pièces à partir d'une nappe ou d'une couche de matériau en utilisant une table de découpage pourvue d'un générateur de vide en vue de fixer fermement le matériau étalé contre la table de découpage, et un chariot mobile horizontalement et transversalement par rapport à la table de découpage et constituant un support pour un outil de coupe, les mouvements de cet outil suivant un tracé prédéterminé étant commandés par un processeur de données dans lequel des instructions de découpage programmées sont stockées, ainsi qu'il est défini dans les revendications 5 à 12, caractérisé en ce que l'appareil de commande (18) est relié à un ordinateur (160) qui reçoit ses informations d'entrée à partir d'une base de données (162) et d'une entrée de données manuelle, en ce qu'à l'intérieur de l'appareil de commande (18) une unité de traitement centrale (164) est reliée, par l'intermédiaire d'un bus de données, à des unités de commande (168, 170, 172, 174, 176) dans lesquelles sont incorporés les circuits pour l'exécution des fonctions de l'outil de coupe à arc de plasma (16), du mécanisme d'alimentation (10), du chariot de découpage (14) et des ensembles d'étiquetage et d'évacuation (20).

14. Appareil suivant la revendication 13 caractérisé en ce que l'unité de commande (172) comporte un microprocesseur (180) associé à un générateur de ligne de découpage (182) et à des boucles de commande de mise en position (184).

15. Appareil suivant la revendication 14 caractérisé en ce que le générateur de ligne de découpage (182) comporte un générateur de rampe (189) pour produire des signaux de référence de position et une unité arithmétique et logique (ALU 191) pour effectuer les opérations arithmétiques nécessaires, les signaux de commande pour les divers blocks précités et le signal de commande (Px, Py) pour la mise en service des moteurs à courant continu des chariots (14, 20) étant les signaux de sortie d'un séquenceur (193).

16. Appareil suivant la revendication 15 caractérisé en ce que le séquenceur (193) est un circuit bistable à quatre cycles (C1–C4), chaque cycle étant divisés en quatre phases (01–04).

**Patentansprüche**

1. Verfahren zum Zuschneiden von Materialteilen (175) aus einer Materialbahn (120) unter Verwendung eines Schneidtisches (60), einer Vorratsrolle für die Materialbahn, einer längs und quer zum Schneidtisch beweglichen Schlitten-Anordnung (14) als Träger für ein Schneidwerkzeug, dessen Bewegungen längs gewünschter Schneidlinien von einem Markierungs- und Steuerdaten verarbeitenden Datenprozessor (18) gesteuert werden, sowie eines Plasma-Lichtbogen-Brenners (106) als Schneidwerkzeug und einer zugeordneten gasdurchlässigen Schneidfläche, gekennzeichnet durch die Verwendung eines endlosen Förderbandes (26) als Fördermittel für die Materialbahn oder -lage in den Schneidbereich und als Schneidauflage, wobei das Förderband eine bürstenähnliche Anordnung aus Stahlfasern von etwa 0,3 mm Durchmesser, 30 mm Länge und einer Packungsdichte von zirka 75 Fasern/cm² aufweist, durch schrittweises Bewegen des Förderbandes (26) mit einer Schrittweite (+X), die zwecks Fertigschneidens eines Materialteiles größer ist als die größte Bewegung des Plasma-Brenners in X-Richtung, wobei der Plasma-Lichtbogen-Brenner erst nach Durchführung eines Förderschrittes bei stillstehendem Förderband längs der Schneidlinien bewegt wird und durch die Verwendung einer Vakuum-Anlage für das sichere Festhalten der ausgebreiteten Materialbahn auf dem Schneidtisch zumindest in dessen Schneidbereich.

2. Verfahren nach Anspruch 1, dadurch gekennzeichnet, daß die von einer Rolle (10) abgezogene und zuzuschneidende Materialbahn (120) über eine Material-Lose (24) und über einen Förderbereich (36) des Förderbandes geführt ist, ehe sie dem Schneidbereich (60) zugeführt ist, wobei jeder Bereich einer Förderschrittweite entspricht, daß die Material-Lose vor Erreichen des Förderbereichs (36) abgetastet wird, derart, daß der Antrieb (22) des über Sensoren (28, 30, 32, 34) der Material-Lose gesteuerten Rollenabzugs und der Antrieb (48) des endlosen Förderbandes unabhängig voneinander gesteuert werden.

3. Verfahren nach den Ansprüchen 1 und 2, dadurch gekennzeichnet, daß die Materialbahn (120) nach ihrem Schneiden über eine einer Förderschrittweite entsprechende Länge einem Kennzeichnungs- und Abnahmebereich (61) zugeführt wird, innerhalb dessen die Materialbahn (120) auf dem Förderband (26) lediglich mittels Schwerkraft gehalten ist.

4. Verfahren nach den Ansprüchen 1 bis 3, dadurch gekennzeichnet, daß dem Kennzeichnungs- und Abnahmebereich (61) Kennzeichnungs- und Abnahmewerkzeuge (20) zugeordnet sind, die unter Benutzung der in dem Datenprozessor (18) gespeicherten Markierungsdaten des Plasma-Lichtbogen-Brenners in der Längs- und Querrichtung derart gesteuert werden, daß sie jeweils in die Nähe des Schwerpunktes (154) eines zugeschnittenen Materialteiles bewegt werden.

5. Einrichtung zur Durchführung des Verfahrens nach den Ansprüchen 1 bis 4, unter Verwendung eines Schneidtisches (60), einer Vorratsrolle für die Materialbahn und einer längs und quer zum Schneidtisch bewegbaren Schlitten-Anordnung (14), die eine Halterung für einen als Schneidwerkzeug (106) dienenden Plasma-Lichtbogen-Brenner bildet, dessen Bewegungen längs gewünschter Schneidlinien von einem Markierungs- und Steuerdaten verarbeitenden Datenprozessor (18) gesteuert sind, dadurch gekennzeichnet, daß der Schneidtisch mit einer Vakuumanlage (40, 42) zum sicheren Festhalten der ausgebreiteten Materialbahn (20) auf dem Schneidtisch ausgerüstet ist, daß der Schneidtisch als endloses, gasdurchlässiges Förderband (26) ausgebildet ist, das schrittweise mindestens über eine Förder- und Schneidzone (36, 60) über eine Strecke (+X) geführt ist, die größer ist als die größte Schneidbewegung des Plasma-Brenners (106) in X-Richtung zum Fertigschneiden eines Materialteiles, daß ein einen Motor (22) beinhaltender Antrieb für das Abziehen der Materialbahn von der Vorratsrolle in den Bereichen der Material-Lose vorgesehen ist, der über die größte und kleinste Länge einer Material-Lose (24) abtastende Sensoren (28, 30, 32, 34) gesteuert ist, sowie durch einen über Steuersignale aus dem Datenprozessor (18) gesteuerten Gleichstrommotor für den Antrieb des endlosen Förderbandes (26).

6. Einrichtung nach Anspruch 5, dadurch gekennzeichnet, daß der Förder- und Schneidzone (36, 60) eine Kennzeichnungs- und Abnahmezone (61) nachgeordnet ist, deren Ausdehnung in Längsrichtung (X) der Schrittweite des endlosen Förderbandes (26) entspricht, über die das endlose Förderband ebenfalls geführt ist, und daß der Kennzeichnungs- und Abnahmezone (61) eine ebenfalls in Längs- und in Querrichtung unter der Steuerung des Datenprozessors (18) beweglicher Schlitten (20) als Träger für die Kennzeichnungs- und Abhebewerkzeuge (148, 152, 153) zugeordnet ist.

7. Einrichtung nach den Ansprüchen 5 und 6, dadurch gekennzeichnet, daß der Schrittantrieb für das endlose Förderband (26) durch den ebenfalls vom Datenprozessor (18) gesteuerten Antrieb (66) der den Plasma-Brenner tragenden Schlitten-Anordnung (14) in X-Richtung gebildet ist, der über vom Datenprozessor (18) steuerbare Kupplungen (56) mit dem endlosen Förderband (26) zeitweise kuppelbar ist.

8. Einrichtung nach den Ansprüchen 5 bis 7, dadurch gekennzeichnet, daß die Vakuum-Anlage (40) eine Saugkammer (42) aufweist, die sich unterhalb des Obertrums des endlosen Förderbandes (26) über die Förder- und Schneidzone (36, 60) erstreckt.

9. Einrichtung nach den Ansprüchen 5 bis 8, dadurch gekennzeichnet, daß der als Träger für den Plasma-Brenner (106) dienende Schlitten (49) der Schlitten-Anordnung (14) zu beiden Seiten angeordnete steuerbare Reibungskupplungen (56) trägt, denen zu beiden Seiten des endlosen Förderbandes (26) angeordnete Kupplungsstücke (54) zugeordnet sind.

10. Einrichtung nach den Ansprüchen 5 bis 9, dadurch gekennzeichnet, daß die den Plasma-Brenner (106) tragende Schlitten-Anordnung (14) auf parallel zum endlosen Förderband (26) angeordneten Schienen (64) geführt und mittels endloser Zahnriemen (84) bewegt ist, die über einen in einer die Längsbewegung (X) steuernden Regelschleife liegenden Gleichstrommotor (66) synchron zueinander angetrieben sind.

11. Einrichtung nach den Ansprüchen 5 bis 10, dadurch gekennzeichnet, daß der Plasma-Brenner (16) über einen Halter (62) mit einem in einem quer zum Förderband (26) angeordneten Träger-Schlitten (49) angeordneten endlosen Zahnriemen (102) lösbar verbunden ist, der von einem in einer die Querbewegung (Y) steuernden Regelschleife liegenden Gleichstrommotor (90) angetrieben ist.

12. Einrichtung nach den Ansprüchen 5 bis 11, dadurch gekennzeichnet, daß das Kennzeichnungs-Werkzeug ein Etikettiergerät (148) ist, daß als Abhebewerkzeug Saugdüsen (152, 153) dienen, die an einer in Querrichtung (Y) bewegbaren Zahnstange (150) angeordnet sind, welche der Breite des endlosen Förderbandes (26) etwa entspricht, daß Etikettiergerät und Saugdüsen zu beiden Seiten eines in Längs- und Querrichtung (X, Y) beweglichen Schlitten-Anordnung (20) angeordnet sind, und daß die Saugdüsen (152, 153) tragende Zahnstange (150) senkrecht zur Ebene des Förderbandes (26) bewegbar gelagert ist.

13. Einrichtung zum Zuschneiden von Materialteilen aus einer Materialbahn oder- lage unter Verwendung eines mit einer Vakuum-Anlage versehenen Schneidtisches zum Festhalten der auf dem Schneidtisch ausgebreiteten Materialbahn und einem längs und quer zum Schneidtisch beweglichen Schlitten als Träger für ein Schneidwerkzeug, dessen Bewegungen längs gewünschter Schneidlinien von einem gespeicherte Markierungs- und Steuerdaten verarbeitenden Datenprozessor gesteuert werden, insbesondere nach den Ansprüchen 5 bis 12, gekennzeichnet durch ein Steuergerät (18), das mit einem Hauptrechner (160) verbunden ist, der einen über einen Basisspeicher (162) und über eine im Steuergerät befindliche manuelle Eingabevorrichtung gespeist ist und durch eine zentrale Prozessor-Einheit (164), die über einen Datenbus mit Steuereinheiten (168, 170, 172, 174, 176) verbunden ist, die die Schaltkreise für die Steuerung der Funktionen des Plasma-Brenners (16), des Vorschubes (10), der Schlitten-Anordnung (14) und der Etikettier- und Abnahme-Vorrichtung (20) enthalten.

14. Einrichtung nach Anspruch 13, dadurch gekennzeichnet, daß die Steuereinheit (172) einen Mikroprozessor (180) umfaßt, dem ein Schneidlinien-Generator (182) und Positions-Regelschleifen (184) zugeordnet sind.

15. Einrichtung nach Anspruch 14, dadurch gekennzeichnet, daß der Schneidlinien-Generator (182) einen Rampen-Generator (180) zur Erzeugung von Positions-Referenz-Signalen und eine Arithmetik-Logik-Einheit (191) zur Durchführung arithmetischer Operationen umfaßt, und daß ein Sequenzer (193) für die Ausgabe von Taktsignalen und von die Gleichstrommotore der Schlitten (14, 20) aktivierenden Steuersignalen (Px, Py) vorgesehen ist.

16. Einrichtung nach Anspruch 15, dadurch gekennzeichnet, daß der Sequenzer (193) als eine vier in vier Phasen (P₁–P₄) unterteilte Schaltzyklen (C₁–C₄) aufweisende bistabile Schaltungsanordnung ausgebildet ist.

FIG. 3

FEEDING ZONE

CUTTING ZONE

LABEL AND PICKUP ZONE

FIG. 1

FIG. 7

FIG. 2

FIG. 5

FIG. 6

36-FEEDING ZONE     60-CUTTING ZONE     61-LABEL AND PICKUP ZONE

42

40

FIG. 4

EP 0 198 274 B1

EP 0 198 274 B1

FIG. 8

112

106

114

110

108

FIG. 9

FIG. 10

EP 0 198 274 B1

100'

152

49'

150

152

158

62

153

154

104'

148

FIG. 11

160

Y

154

X

FIG. 12

DATA BASE

162

160

HOST COMPUTER

TYPE WRITER

BUS

164

168 | 170 | 172 | 174 | 176

16 | 10 | 14 | 20

18

FIG. 13

175

CUTTING AREA

CONVEYOR MOTION (26)

+X

FIG. 14

177

EP 0 198 274 B1

FIG. 15

EP 0 198 274 B1

FIG. 16

FIG 17